## Europäisches Patentamt
## European Patent Office
## Office européen des brevets

(19)

(11) Publication number: **0 006 317**
**A1**

(12)

# EUROPEAN PATENT APPLICATION

(21) Application number: **79300979.6**

(51) Int. Cl.³: **G 01 F 23/28, G 08 B 5/36**

(22) Date of filing: **29.05.79**

(30) Priority: **31.05.78 GB 2498278**

(43) Date of publication of application: **09.01.80**
Bulletin 80/1

(84) Designated Contracting States: **DE FR IT SE**

(71) Applicant: **EATON S.A.M., 14 Boulevard du Bord de Mer Boîte Postale 84, Monaco (MC)**

(72) Inventor: **Corbier, Jean Paul, 10, Avenue du Professeur Langevin, 06240 Beausoleil (FR)**

(74) Representative: **Wright, Peter David John et al, R.G.C. Jenkins & Co. 53-64 Chancery Lane, London WC2A 1QU (GB)**

(54) **Liquid level detector.**

(57) A liquid level detector comprises a light transmissive element (26) having a display area (28), and a number of vertically displaced surface portions (30, 44 to 54, or 72 and 74) located below this display area (28) and arranged in a helical path around a vertical axis. When no liquid is present at a surface portion light is internally reflected thereby to the display area (28), and, when liquid is present, light is refracted into the liquid. As the liquid level increases, an indication (42, 68 or 78) on said display area (28) moves in a generally circumferential direction around the area. The surface portions can either be discrete, discontinuous surfaces (44 to 54, or 72 and 74), or form a continuous region (30).

ACTORUM AG

TITLE

Liquid Level Detector

TECHNICAL FIELD

This invention relates to liquid level detectors, and in particular to the type of detector which comprises a member of light transmitting material, having a surface which internally reflects light to a display area when there is no liquid present at the surface, and which, when liquid is present at the surface, refracts the light into the liquid.

BACKGROUND ART

It is known to provide liquid level detectors made of light transmissive material and having a surface including a display area and a portion arranged for internally reflecting light entering the detector toward the display area. The refractive index of the material and the angular position of the surface portion are so arranged that when liquid is present at the surface portion the light is refracted into the liquid, so that the display area becomes dark to indicate the presence of the liquid. The surface portion may have a substantially conical shape, with the axis of the cone extending vertically, the arrangement being such that when the liquid level is part-way up the cone a circular indication is given on the display area. The diameter of the indication will indicate the precise location of the liquid level.

It is also known to use detectors having several such surface portions, the portions being vertically displaced from each other so that the detector is operable to provide indications representing several discrete liquid levels. One form of such a detector has a generally cylindrical shape, the portions forming coaxial, circular tapered surfaces extending around the cylinder.

With the above-mentioned types of detectors, it is necessary to judge the diameter of the indication on the display area to determine the level of the liquid. This can creat difficulties when the precise location of the level is to be determined. Furthermore, if several surface portions are provided for indicating discrete levels, the number of such portions which can be provided without severely impairing the clarity and definition of the display is limited.

## DISCLOSURE OF INVENTION

In accordance with the invention, a liquid level detector comprises a member of light transmissive material having a surface including a number of portions which are, with the detector in a position for use, vertically displaced from each other, and each of which is arranged in such a manner that, when no liquid is present at the portion, light entering the member is internally reflected thereby to a display area on said surface, and, when liquid is present, said light is refracted into said liquid, characterised in that the surface portions are located so that, with the detector in its use position, they are successively arranged around a vertical axis, whereby the level of liquid can be determined from the angular position of an indication around a point on said display area.

With such an arrangement, the liquid level is determined by judging the angular position, rather than the diameter, of an indication. This makes the indication easier to read, and hence liquid level can be determined with more accuracy.

In one embodiment, the surface portions are discrete, to provide indications of discrete levels of the liquid. With the arrangement of the invention, the number of discrete surface portions may be considerably higher than those which can effectively be used with the prior art arrangement described above.

In another embodiment, the surface portions are arranged continuously, to provide a continuous indication of varying levels of liquid.

Preferably, the surface portions are arranged along a helical path, the axis of the helix being substantially vertical when the detector is in its use position. The display area may form a substantially horizontal surface located above the helically arranged portions. In this case, as the liquid level increases, the indication on the display area will progressively rotate around the vertical axis. Such an arrangement provides a clear and accurate display of the level of the liquid.

BRIEF DESCRIPTION OF DRAWINGS

Figure 1 is a side view of a liquid level detector of the prior art.

Figure 2 is a plan view of the detector of Figure 1.

Figure 3 is a side view of a liquid level detector in accordance with the invention.

Figure 4 is a plan view of the detector of Figure 3.

Figure 5 is a side view of another embodiment of a liquid level detector in accordance with the invention.

Figure 6 is a plan view of the detector of Figure 5.

Figure 7 is a plan view of a modified version of the detector of Figure 5.

Figure 8 is a side view of a further embodiment of a liquid level detector in accordance with the invention.

Figure 9 is a plan view of the detector of Figure 8.

Figure 10 is a plan view of a modified version of the detector of Figure 8.

DETAILED DESCRIPTION OF PREFERRED EMBODIMENTS

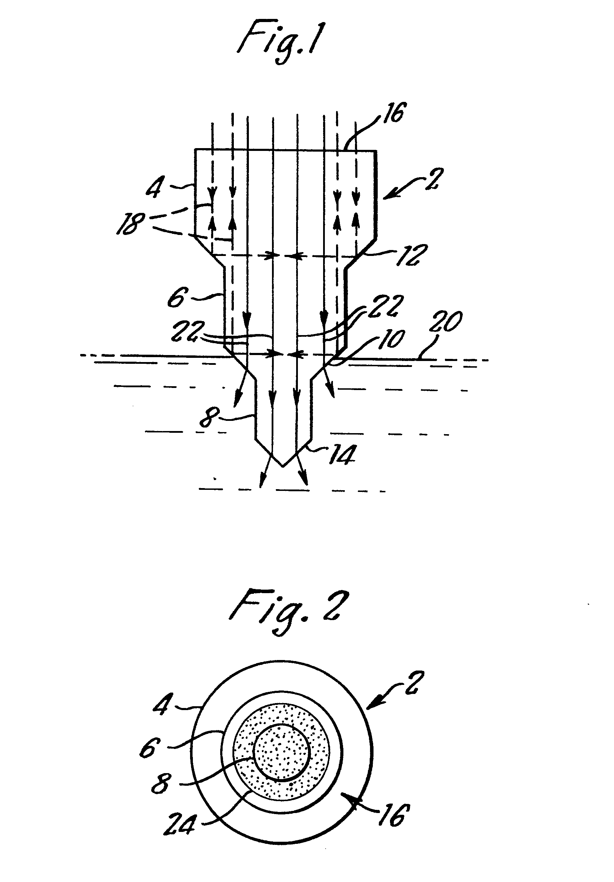

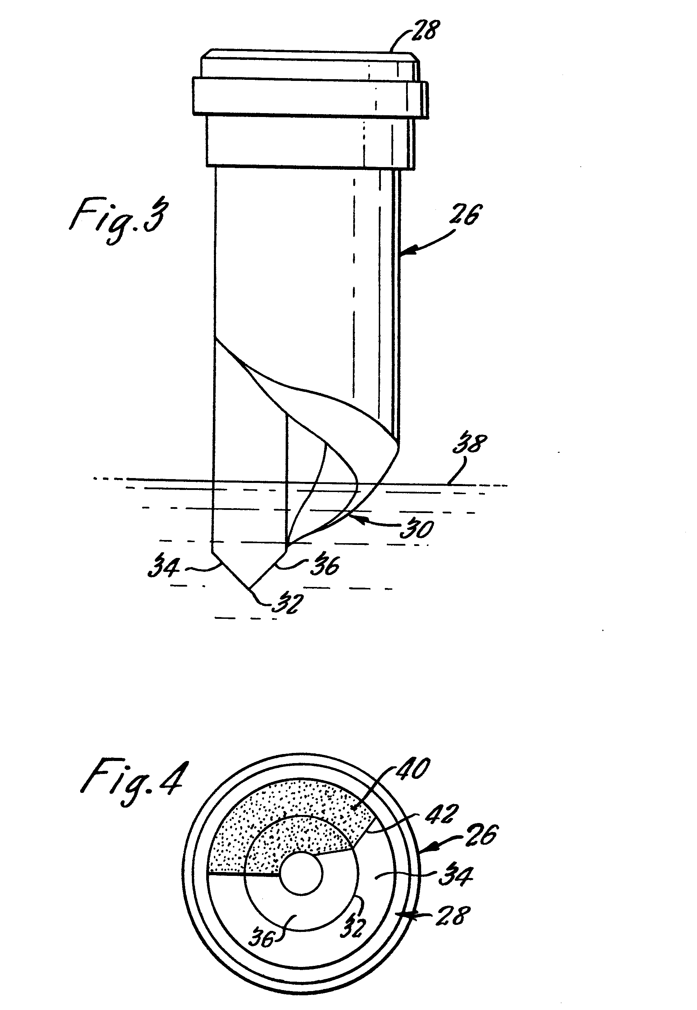

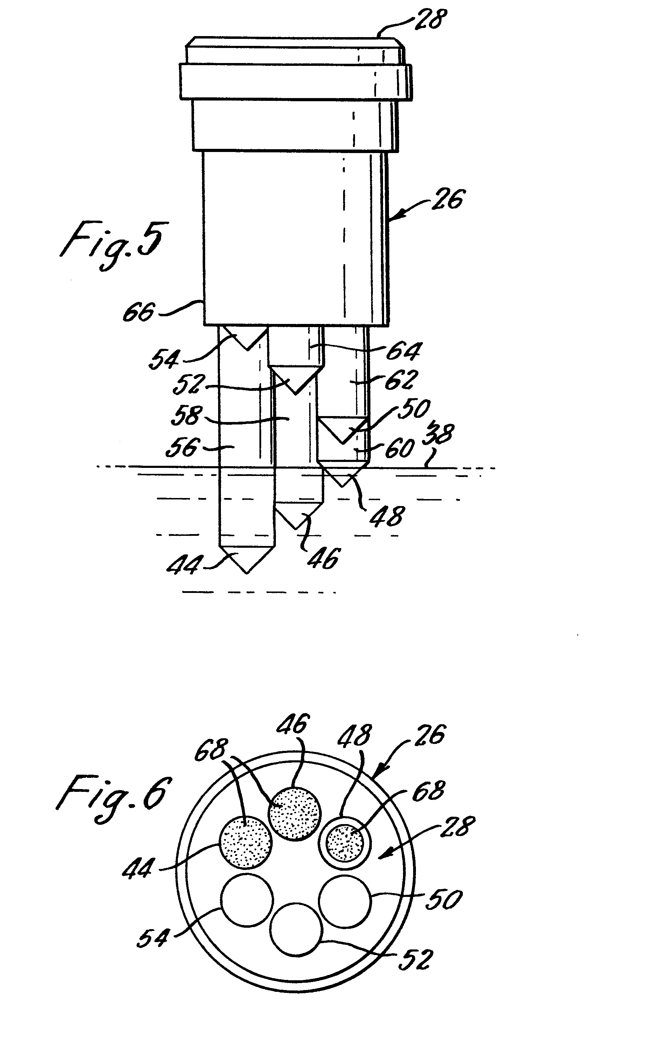

Referring to Figures 1 and 2, a known liquid level detector comprises an element 2 which is generally cylindrically shaped, and which is made of a transparent material. The element has upper, middle and lower portions 4, 6 and 8 respectively. These portions have different diameters, the portions 6 and 8 being interconnected by means of a frusto-conical portion indicated at 10, and the portions 4 and 6 being interconnected by a further frusto-conical portion 12. The lower end 14 of the bottom portion 4 has a conical shape.

The upper, horizontal surface 16 of the element 2 forms a display area. The outer edges of the portions 6 and 8 can be seen by looking downwardly at this area.

In vertical section, each of the surfaces 10, 12 and 14 is aligned at 45° to the horizontal. When no liquid is present, light entering the element 2 vertically through the display area 16 is internally reflected from a point on one of the surfaces, the light then travelling horizontally across the element 2 where it is internally reflected from another point on the same surface so that it then travels upwardly back through the display area 16. This is indicated by the light rays 18 shown in broken lines.

If, however, liquid is present at any of the surfaces 10, 12 or 14, the light incident on that surface is instead refracted into the liquid. For example, assuming that the liquid is at the level indicated at 20 in Figure 1, any light which is incident on a conical surface below this level, instead of being reflected, is directed into the liquid as indicated by the light rays 22.

Referring to Figure 2, this causes a circular, darkened area 24 to appear in the centre of the display area 16. The diameter of the darkened area 24 represents the level of the liquid.

Referring to Figures 3 and 4, a detector in acocrdance with the invention comprises a generally cylindrical, transparent element 26, having a flat, upper surface forming a display area 28.

The lower surface/of the element 26 extends in a helical path around the vertical axis of the element. Considering a vertical section through the axis of the element 26, the surface 30 is V-shaped, having a bottom edge 32 and sides 34 and 36 extending upwardly at 45° to the horizontal.

With no liquid present at the surface 30, light travelling vertically downwardly after entering the upper surface forming the display area 28 travels to one of the surfaces 34 and 36. The light is then reflected so that it travels in a horizontal direction and thus becomes incident on the other of the surfaces 34 and 36. The light then is reflected upwardly so that it exits from the element 26 via the display area 28.

When liquid is present, the light no longer reflects from those portions of the surfaces 34 and 36 which are submerged. Instead, the light is refracted by the surfaces into the liquid.

For example, if the liquid is at the level indicated at 38 in Figure 3, light will be refracted by the parts of the surfaces 34 and 36 below this level, so that a dark area 40 (Figure 4) is formed on the display area 28. The position of the edge 42 of this darkened area is determined by the liquid level 38, and in fact is an image of the position where the liquid-air boundary contacts the surfaces 34 and 36.

It will be apprecuated that as the liquid level changes, the edge 42, which is substantially radial with respect to the centre of the display area 28, will move circumferentially around this centre.

This arrangement therefore provides a continuous indication, formed by the angular position of the edge 42 around the centre of the display area 28, of the liquid level.

Figures 5 and 6 show another embodiment of a detector in accordance with the invention, some of the parts of which are similar to those of the detector of Figures 3 and 4, and are identified by the same reference numerals.

In this embodiment, the surface portions used for reflecting or refracting light according to the level of liquid are indicated at 44, 46, 48, 50, 52 and 54. Each such portion has a conical shape similar to that of the portion 14 of the detector of Figures 1 and 2. The portions 44 to 52 form the lower ends of cylindrical parts 56, 58, 60, 62 and 64 respectively, and these and the portion 54 extend downwardly from a cylindrical body portion 66 of the element 26.

Referring to Figure 6, it will be observed that circles constituting the images of the upper edges of the portions 44 to 54 can be observed on the display area 28. These circles form a hexagonal array.

The portions 44 to 54 are vertically displaced and arranged along a helical path, so that as the liquid level rises, the portions are sequentially submerged. As each portion is submerged, light is caused to be refracted into the liquid in the manner described above, so that the image of the portion on the display area 28 darkens.

With the level of the liquid as indicated at 38 in Figure 5, the portions 44 and 46 are fully submerged, and portion 48 is partially submerged. Referring to Figure 6, this causes the darkened areas indicated at 68 to appear on the display area 28. It will be appreciated that, as the level of the liquid rises, each of the circles forming the image of the portions 44 to 54 will be darkened in turn, the darkened images appearing in a clockwise sequence. The level of the liquid can thus be determined from the position of the last darkened image in the clockwise direction. Furthermore, intermediate values of the liquid level, i.e. the values when one of the portions

0006317

44 to 54 is partially submerged, can be determined by estimating the diameter of the darkened area of the image corresponding to the partially submerged portion. This therefore provides an accurate indication of the liquid level.

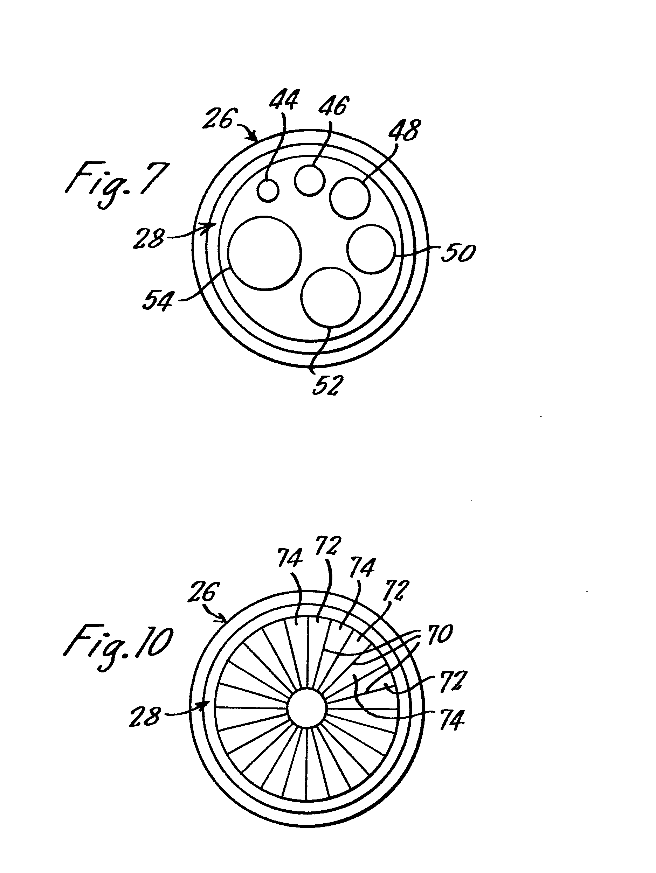

Figure 7 shows a modification of the embodiment of Figures 5 and 6. In this case, the maximum diameters of the portions 44 to 54 increases from the lowest portion 44 to the highest portion 54. Thus, as the level rises, the darkened images become progressively larger, to provide a clearer indication of the level.

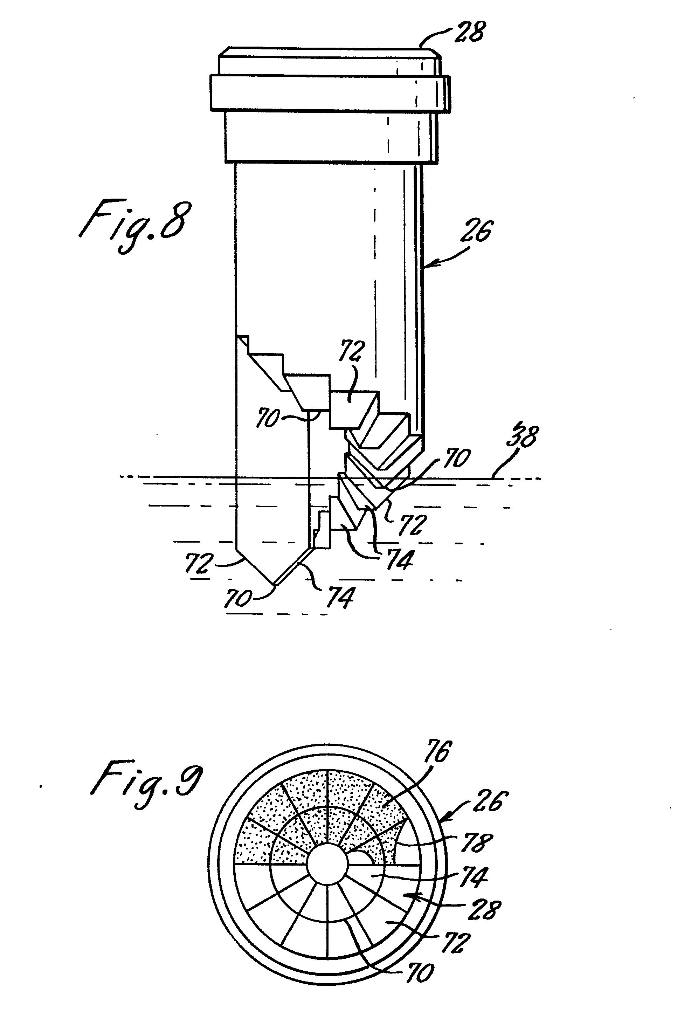

Figures 8 and 9 show a further embodiment of a detector in accordance with the invention. Some of the parts are similar to those of the previously described embodiments, and like parts have been given like reference numerals.

In this case, the surface portions which are adapted to reflect or refract light depending upon whether liquid is present form a stepped array extending in a helical path about the axis of the element 26. Each step of the array is V-shaped in a vertical section taken through the axis of the element 26. The stepped portions each have an apex 70 and, extending upwardly at an angle of $45^{\circ}$ from the apex, two surface portions 72 and 74.

The surfaces 72 and 74 act in a similar manner to the surfaces 34 and 36 of the embodiment of Figures 3 and 4, in that light passing downwardly through the display area 28 reflects off one of the surfaces, then off the other of the surfaces, and is then directed upwardly back through the display area 28. However, when liquid is present at the surfaces, the light is instead refracted into the liquid.

Figure 9 illustrates the images of the surfaces 72 and 74 of the respective stepped portions on the display area 28.

With the liquid level as indicated at 38 in Figure 8, the images of those stepped portions which are submerged are darkened as indicated at 76 in Figure 9. The edge 78 of the darkened area represents the position of the liquid-air boundary at the partially submerged stepped portion.

As in the previous embodiment, an increase of the level of the liquid causes the darkened area to extend in a clockwise direction around the centre of the display area 28. The level of the liquid can thus be determined from the angular position of this edge 78.

When one of the stepped portions is partially submerged, a more accurate indication of the level can be determined by judging the proportion of the image of that portion which is darkened.

In the arrangement of Figures 8 and 9, the surface 72 is positioned radially outwardly of the surface 74 of each of the stepped portions. The arrangement can be modified so that each stepped portion has an apex 70 which extends radially, the surfaces 72 and 74 extending upwardly from opposite sides of the apex 70, i.e. the surfaces 72 and 74 are circumferentially displaced, rather than radially displaced. This would produce a display pattern as indicated in Figure 10. As in the previous embodiments, an increase of the level of the liquid causes the edge of the displayed darkened area to move clockwise around the centre of the display area.

Also, as in the embodiments of Figures 5 to 9, when one of the surface portions is partially submerged, an accurate estimate of the level can be obtained by determining the proportion of the image of the partially submerged portion (i.e. the combined images of the associated surfaces 72 and 74) which has been darkened.

## INDUSTRIAL APPLICABILITY

The level detector of the invention can be used to advantage in any form of liquid dispenser having a storage compartment, and provides a clear warning when the level becomes low. It is useful for example in detecting the level of water in washing machines or dishwashers, or the level of fuel in heating systems. The detector could also be used for drinks dispensers, e.g. vending machines. There are also a number of uses in the vehicle field. For example, the detector could be used to advantage for detecting the level of water in a car radiator or a car windscreen washer supply, or for detecting the level of fuel in the fuel tank or the hydraulic fluid in the brake or clutch reservoir.

The detector could be sold separately for fitting to existing appliances, and may be used in place of standard detectors.

0006317

CLAIMS

1. A liquid level detector comprising a member (26) of light transmitting material having a surface including a number of portions (e.g. 30, 44 to 54, or 72 and 74) which are, with the detector in a position for use, vertically displaced and each of which is arranged in such a manner that, when no liquid is present at said portion, light entering the member is internally reflected thereby to a display area (28) on said surface, and, when liquid is present, said light is refracted into said liquid, characterised in that the surface portions (e.g. 30, 44 to 54, or 72 and 74) are located so that, with the detector in its use position, they are successively arranged around a vertical axis, whereby the level (38) of liquid can be determined from the angular position of an indication (e.g. 42, 68 or 78) around a point on said display area.

2. A detector as claimed in claim 1, wherein said surface portions form a continuous region (30) extending upwardly and around said vertical axis, so as to provide a continuous indication (42) of said liquid level (38).

3. A detector as claimed in claim 1, characterised in that said surface portions (44 to 54) are discrete, and each have a substantially conical shape.

4.     A detector as claimed in claim 1, characterised in that said portions (72 and 74) are discrete, and each has an apex (70) and a pair of surfaces (72 and 74) extending upwardly from opposite sides of said apex (70).

5.     A detector as claimed in claim 4, wherein said surfaces (72 and 74) are displaced radially with respect to said axis.

6.     A detector as claimed in claim 4, characterised in that said surfaces (72 and 74) are circumferentially displaced with respect to said apex (70).

7.     A detector as claimed in claim 3, characterised in that the maximum diameter of each of said conical portions varies progressively from the lowest (44) of said portions to the highest (54) of said portions.

8.     A detector as claimed in claim 1, characterised in that said surface portions (30, 44 to 54, or 72 and 74) are arranged in a helical path around said vertical axis, the display area, in the use position of the detector, comprising a substantially horizontal surface (28) located above said surface portions.

9.     A detector as claimed in claim 1, wherein each of said surface portions has at least two areas which, in use of the detector, are inclined at $45^{\circ}$ to the horizontal, and arranged to reflect a vertical light ray to each other when no liquid is present at said surface portion.

*Fig.1*

*Fig. 2*

28

Fig.3

26

38

30

34

36

32

Fig.4

40

42

26

34

28

36

32

0006317

Fig.5

28

26

66

54

52

58

56

64

62

50

60 38

48

44

46

Fig.6

68

46

48

26

44

68

28

54

50

52

Fig.7

Fig.10

0006317

*Fig.8*

28

26

72

70

70

38

72

72

74

72

70

74

*Fig.9*

76

26

78

74

28

72

70

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | US - A - 3 589 191 (A.H. KELCH Jr.)<br>* Figures 1-5 *<br><br>-- | 1,4-6 | G 01 F 23/28<br>G 08 B 5/36 |
| X | US - A - 2 368 705 (E.P. DU PONT<br>* Figures 1-5 *<br><br>-- | 1,3-6,<br>8,9 | |
| | US - A - 2 615 337 (G.E. MAYBACH)<br>* Figures 1-3 *<br><br>-- | 2 | TECHNICAL FIELDS SEARCHED (Int.Cl.²)<br><br>G 01 F 23/28 |
| | US - A - 3 535 934 (G.M. RAPATA)<br>* Figures 1-18 *<br><br>-- | 1,4-6 | |
| | US - A - 3 442 127 (E.B. NICHOLS)<br>* Figures 10,11 *<br><br>---- | 1,4-6 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 05-09-1979 | THIBO |